# FASCICULE DE BREVET EUROPEEN

(11) **EP 0 964 501 B1**
(45) Date de publication et mention de la délivrance du brevet: **09.02.2005**
(21) Numéro de dépôt: 99401438.9
(22) Date de dépôt: 11.06.1999
(51) Int. Cl.: H02K 7/102, F16D 65/16

(54) **Dispositif de freinage d'un moteur, moteur muni du dispositif et appareil muni de ceux-ci**
Bremsvorrichtung für einen Motor und damit ausgerüstete Motor und Gerät
Braking device for a motor and motor and apparatus equipped with such a device

(30) Priorité: 12.06.1998 FR 9807448
(43) Date de publication de la demande: 15.12.1999
(73) Titulaire: MOTEURS LEROY-SOMER, 16000 Angouleme (FR)
(72) Inventeur: Oraison, Jean-Marc, 69700 Saint Andeol le Chateau (FR); Gillet, Guillaume, 69330 Jonage (FR)
(74) Mandataire: Tanty, François

(56) Documents cités:
- EP-A- 0 136 282
- DE-A- 4 423 494
- FR-A- 2 560 722
- US-A- 3 844 387

## Description

L'invention concerne un dispositif de freinage d'un moteur électrique, un moteur électrique muni du dispositif ainsi qu'un appareil muni du dispositif et/ou du moteur.

Le moteur électrique est par exemple un moteur électrique asynchrone monophasé ou polyphasé.

L'appareil est par exemple une tondeuse à gazon, un broyeur, un malaxeur, une machine à bois ou analogues.

Les documents EP-A-136 282 et EP-A-360 779 décrivent un dispositif de freinage d'un moteur électrique à rotor en court-circuit à corps de frein en forme de pot, mobile entre l'anneau de court-circuit et une garniture de frein fixée à un carter du moteur.

Un ressort de poussée est prévu entre le corps de frein et le rotor.

L'anneau de court-circuit du rotor et le corps de frein comportent des saillies présentant des surfaces tournées l'une vers l'autre, planes et inclinées par rapport au fond et à la pardi du corps de frein.

Lorsque l'alimentation du moteur est coupée, le ressort éloigne le corps de frein du rotor vers la garniture de frein.

Les surfaces du corps de frein et de l'anneau de court-circuit entrent en contact réciproque, ce qui augmente la force de freinage, et ce indépendamment de la force du ressort.

Ce dispositif présente l'inconvénient d'un freinage pouvant prendre plus de trois secondes.

Les saillies du corps de frein ont tendance à graver les surfaces en aluminium des saillies de l'anneau de court-circuit. Cela provoque un collage du corps de frein contre la garniture ou même un collage des surfaces des saillies entre elles.

De plus, les surfaces des saillies sont fragilisées et les saillies ont tendance à s'effondrer.

Le corps de frein ne comporte que deux saillies diamétralement opposées, ce qui provoque un basculement du corps de frein par rapport à l'axe du rotor, générant des vibrations indésirables ainsi qu'une instabilité lors du freinage.

Ce dispositif présente l'inconvénient d'un blocage intempestif du corps de frein contre la garniture, empêchant la remise en marche du moteur, en raison des surfaces des saillies.

Enfin, ce dispositif est d'un coût de fabrication élevé.

Le document EP-A-544 223 décrit un moteur électrique comportant une culasse de freinage, un anneau de court-circuit et un ressort hélicoïdal interposé entre eux.

Sur la culasse, est prévue une bague en coin coopérant avec des surfaces en oblique de l'anneau de court-circuit.

Ce moteur présente l'inconvénient d'un temps de freinage relativement long et d'un coût de fabrication relativement élevé de sa culasse.

Le document DE-A-2 919 672 décrit, successivement suivant l'arbre du rotor d'un moteur électrique, un anneau de court-circuit, une culasse monobloc en un matériau magnétique, un premier ressort, un disque de freinage et une garniture de freinage fixée au carter du moteur.

Des surfaces de butée courbes sont ménagées dans l'anneau de court-circuit et coopèrent avec des surfaces complémentaires en forme de cames prévues sur la culasse.

Un ressort dans l'anneau pousse la culasse vers la garniture de freinage.

Une rondelle est fixée à la culasse pour éloigner le disque de freinage de la garniture, lorsque la culasse est attirée vers l'anneau.

Ce moteur présente l'inconvénient d'un dispositif de freinage relativement compliqué.

Enfin, le document US-A-3 096 863 décrit un frein destiné à arrêter rapidement la rotation d'un arbre auquel est fixé un disque, par rapport à un carter.

Entre le disque et le carter est prévu un deuxième disque coulissant comportant des saillies coniques.

La paroi du carter, tournée vers le deuxième disque, comporte des évidements triangulaires correspondants de réception des saillies.

Lorsqu'une bobine logée dans le carter est alimentée en électricité, le deuxième disque est attiré sur le carter à l'encontre d'un ressort logé dans celui-ci, permettant la rotation de l'arbre.

Lorsque la bobine n'est plus alimentée, le ressort appuie le deuxième disque contre le premier disque.

Cela fait tourner le deuxième disque autour de l'arbre avec un effet de came entre les saillies et les évidements.

Ce frein présente l'inconvénient de ne freiner que des disques à faible moment d'inertie et de ne pas freiner rapidement des rotors à un moment d'inertie important.

L'invention vise à pallier les inconvénients de l'état de la technique.

En particulier, l'invention vise, notamment pour des raisons de sécurité pour l'utilisateur, à obtenir un temps de freinage du moteur relativement court, notamment inférieur à trois secondes.

Ce temps de freinage doit être obtenu même pour les fortes inerties.

Le dispositif de freinage selon l'invention vise également à permettre d'effectuer un grand nombre de freinages, notamment plusieurs milliers de freinages.

Cela doit être obtenu sans qu'une usure des différents organes mécaniques du dispositif de freinage, risquant de détériorer ses performances et notamment le temps de freinage, n'apparaisse.

Le disposif de freinage selon l'invention vise par ailleurs à abaisser les coûts de fabrication et doit avoir une structure se prêtant facilement à la fabrication en série.

L'invention vise également à éviter un blocage du dispositif de freinage.

Un premier objet de l'invention est un dispositif de freinage d'un moteur électrique, notamment d'un appareil tel que tondeuse à gazon, comportant:
- un anneau de court-circuit de rotor à cage d'écureuil, l'anneau étant destiné à être monté tournant par rapport à un carter du moteur autour d'un axe de rotation;
- au moins une surface de freinage telle que garniture, destinée à être immobilisée par rapport au carter et à être disposée à distance axialement de l'anneau de court-circuit;
- un induit de frein, comportant une tôle fabriquée par emboutissage et en un matériau magnétique doux, monté mobile axialement entre une première position de freinage sur la surface de freinage et une deuxième position éloignée de celle-ci ; et
- un ressort de poussée de l'induit de frein de la deuxième position à la première position.

L'anneau de court-circuit et l'induit de frein comportent respectivement des première et deuxième surfaces d'appui tournées l'une vers l'autre et inclinées par rapport à l'axe.

La surface de l'anneau de court-circuit, tournée vers l'induit de frein, comporte un première partie intérieure, dans laquelle la première surface d'appui est ménagée en creux, et une deuxième partie extérieure de révolution autour de l'axe et raccordée à la première partie intérieure.

Les première et deuxième surfaces d'appui comportent des première et deuxième rampes hélicoïdales de guidage réciproque, inclinées axialement vers l'intérieur du rotor.

Le pas des rampes est orienté de manière que l'induit de frein soit déplacé de la deuxième à la première position, par rotation de l'anneau de court-circuit par rapport à l'induit de frein dans le sens de rotation du rotor par rapport au carter.

L'induit de frein est guidé de la deuxième position à la première position par rapport à l'anneau de court-circuit uniquement par l'intermédiaire des rampes.

Suivant d'autres caractéristiques, les première et deuxième surfaces d'appui comprennent respectivement des troisième et quatrième rampes hélicoïdales de guidage réciproque, inclinées axialement vers l'intérieur du rotor, de pas orienté de manière inverse par rapport à celui des première et deuxième rampes et raccordées à celles-ci au fond du creux qu'elles délimitent.

Le coefficient de frottement de la deuxième rampe sur la première rampe est inférieur à l'angle de plus grande pente de celle-ci par rapport à un plan perpendiculaire à l'axe.

L'angle d'inclinaison de l'hélice des rampes, par rapport à un plan perpendiculaire à l'axe, correspond à un angle de pas, compris entre 25° et 40°.

L'inclinaison vers l'intérieur du rotor des rampes hélicoïdales est comprise entre 20° et 50°, par rapport à un plan perpendiculaire à l'axe.

Le dispositif de freinage est agencé de manière que les rampes de l'induit de frein restent dans le creux délimité par les rampes de l'anneau de court-circuit, dans la première position de freinage.

Les première et troisième rampes, respectivement les deuxième et quatrième rampes sont symétriques l'une de l'autre par rapport à un plan axial et sont raccordées entre elles par une arête rectiligne comprise dans ce plan axial.

Les rampes de l'anneau de court-circuit et de l'induit de frein sont localisées en des endroits déterminés, par exemple répartis régulièrement de la première partie intérieure et d'une partie de l'induit de frein intérieure à un corps de révolution, par exemple une couronne, de l'induit de frein.

L'induit de frein comporte un corps de révolution, par exemple une couronne, portant une surface de freinage tournée vers la surface de freinage immobilisée par rapport au carter, et un tube intérieur, par exemple cylindrique circulaire, raccordé par une partie extrême à la partie intérieure du corps de révolution.

Les rampes de l'induit de frein sont prévues sur des renfoncements de raccordement de la partie intérieure au tube, dirigés vers l'anneau de court-circuit, la partie extrême libre du tube comportant un rebord de butée, par exemple plan perpendiculaire à l'axe et annulaire, contre le ressort et contre le rotor en deuxième position.

L'anneau de court-circuit comporte une cavité intérieure de logement du tube.

Le rotor comporte une cavité de logement du ressort et un épaulement d'appui du ressort, par exemple formés par un déviateur de flux interne du rotor, obtenu par usinage de tôles du rotor, par empilage de celles-ci avec des diamètres différents d'alésages, obtenus par découpage des tôles, ou autres.

La cavité de logement du tube est délimitée par une surface intérieure axiale et un deuxième épaulement du rotor, par exemple formé par les premières tôles du rotor tournées vers l'anneau de court-circuit.

Un jeu est prévu entre le tube et la surface intérieure de la cavité de logement du tube, entre le corps de révolution de l'induit de frein et la surface latérale de l'anneau de court-circuit, ainsi qu'entre les rampes de l'induit de frein et celles de l'anneau de court-circuit en deuxième position.

En deuxième position, l'induit de frein est à distance de l'anneau de court-circuit et n'est en contact avec le rotor que par le rebord de butée en appui dans ce cas sur le deuxième épaulement.

Les rampes de l'induit de frein ont une fonction de raidisseur, empêchant ou limitant sa déformation en position de freinage.

Le dispositif de freinage comporte un déviateur de flux externe fixé à l'anneau de court-circuit, l'induit de frein étant exempt de capteur de flux.

Le déviateur de flux comprend une bague en un matériau ferromagnétique entourant l'anneau de court-circuit et fixé à celui-ci, par exemple par ajustement serré, par des griffes élastiques ménagées par découpage et/ou emboutissage dans la bague, ou par matriçage.

Les rampes de l'anneau de court-circuit ou l'anneau de court-circuit est en aluminium, et les rampes de l'induit de frein ou l'induit de frein est en acier magnétique doux.

Un deuxième objet de l'invention est un moteur électrique, notamment d'un appareil tel que tondeuse à gazon, comportant un rotor à anneau de court-circuit, un stator, un carter et le dispositif de freinage.

Un troisième objet de l'invention est un appareil, par exemple une tondeuse à gazon, équipée du moteur et/ou du dispositif de freinage.

L'invention sera mieux comprise à la lecture de la description qui va suivre.

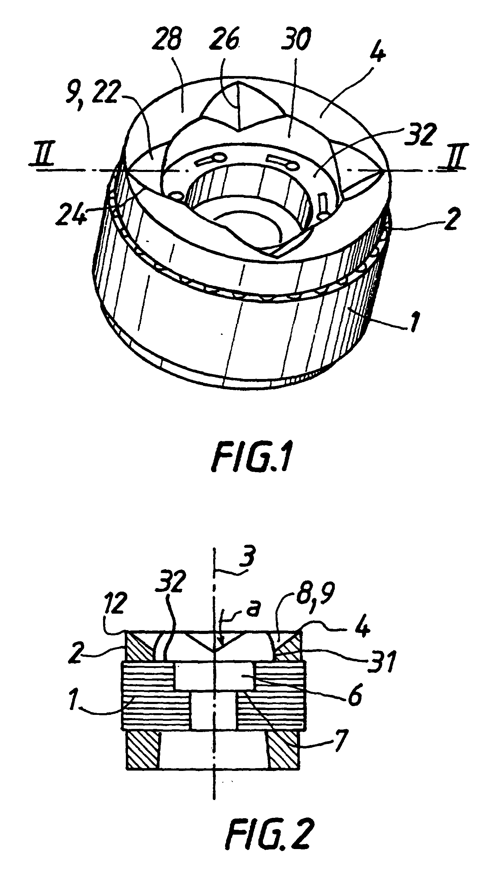

La figure 1 est une vue schématique en perspective de dessus du rotor à anneau de court-circuit.
La figure 2 est une vue schématique en coupe selon la ligne II-II du rotor représenté en figure 1.

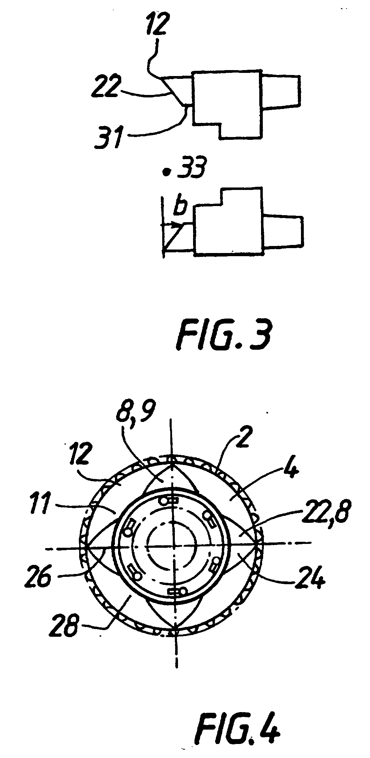

La figure 3 est une vue schématique en section selon la ligne II-II du rotor représenté en figure 1.
La figure 4 est une vue schématique de dessus de l'anneau de court-circuit.

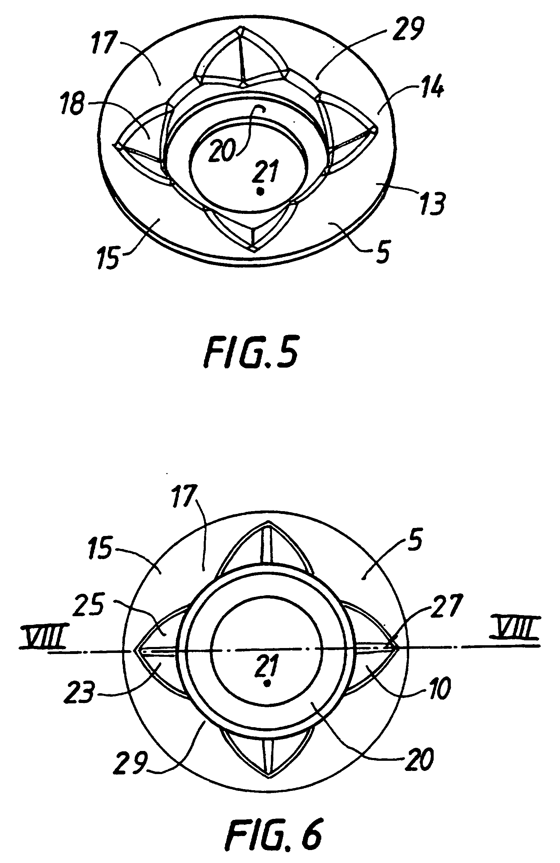

La figure 5 est une vue schématique en perspective de dessus de l'induit de frein.
La figure 6 est une vue schématique de dessous de l'induit de frein.

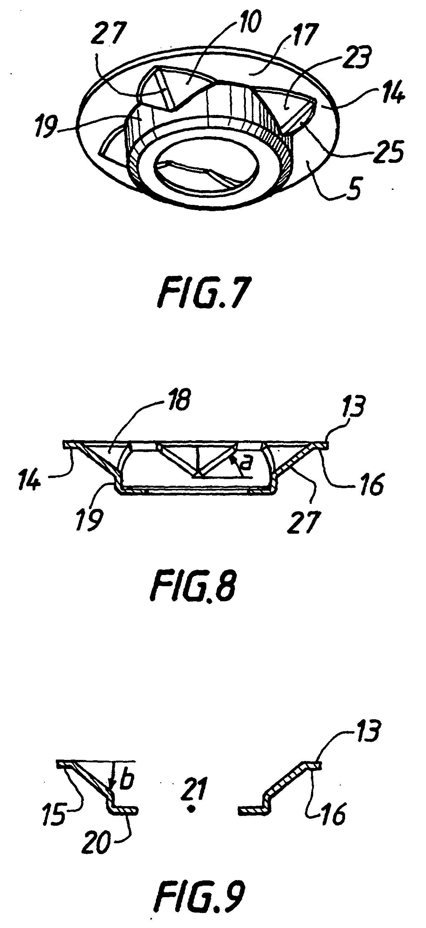

La figure 7 est une vue schématique en perspective de dessous de l'induit de frein.
La figure 8 est une vue schématique en coupe selon la ligne VIII-VIII de l'induit de frein représenté en figure 6.
La figure 9 est une vue schématique en section selon la ligne VIII-VIII de l'induit de frein représenté en figure 6.

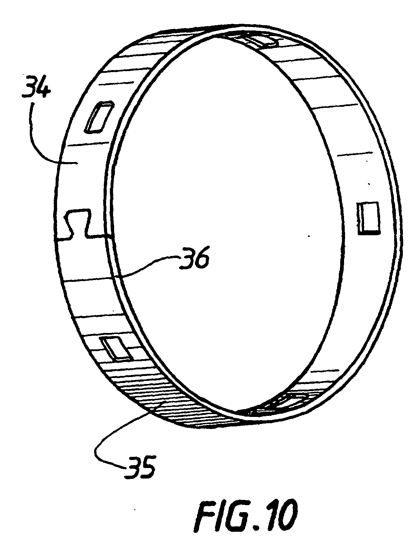

La figure 10 est une vue schématique en perspective d'un déviateur de flux.

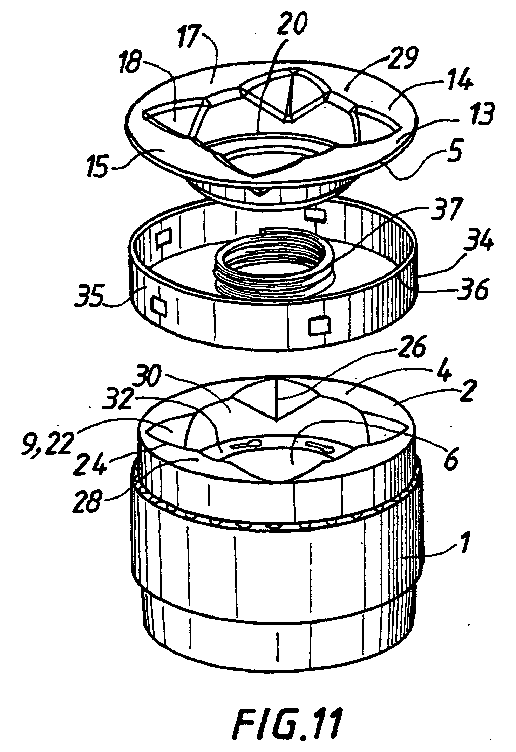

La figure 11 est une vue schématique en perspective éclatée du dispositif de freinage.

La description est effectuée en référence à un dispositif de freinage d'un moteur électrique, par exemple asynchrone monophasé à cage d'écureuil, non représenté.

Bien entendu, l'invention s'applique également aux moteurs électriques polyphasés.

Le moteur est destiné à entraîner en rotation un organe de travail, par exemple un outil coupant et tournant, notamment dans des appareils tel que tondeuse à gazon, broyeur, malaxeur, machine à bois ou analogues.

Le moteur comporte, de manière classique, un carter, un stator, un arbre, qui ne sont pas représentés et un rotor 1 à cage d'écureuil et à anneau de court-circuit 2.

Le rotor 1 et donc l'anneau de court-circuit 2 sont calés sur l'arbre.

L'arbre est guidé en rotation dans le carter et définit un axe de rotation 3, par référence auquel sont pris les termes "axe" et "axial".

Le rotor 1, l'arbre et l'anneau de court-circuit 2 sont immobilisés en translation axiale par rapport au carter.

L'anneau de court-circuit 2 comporte une surface transversale ou côté 4, tourné axialement vers et à distance de moyens mécaniques de freinage, fixes par rapport au carter et non représentés.

Ces moyens mécaniques de freinage présentent une surface de freinage tournée axialement vers le côté 4 et se trouvant par exemple sur une ou plusieurs garnitures de frein ou analogue, par exemple fixées sur un palier du carter.

Cette surface de freinage occupe tout ou partie de la périphérie de l'axe 3.

Un induit de frein 5 est monté entre le côté 4 de l'anneau de court-circuit et les moyens mécaniques de freinage.

L'induit 5 de frein est mobile axialement entre l'une et l'autre de deux positions :
* une première position de freinage, dans laquelle l'induit de frein 5 est appliqué contre la surface de freinage fixe par rapport au carter ; et
* une deuxième position, dans laquelle l'induit de frein 5 est éloigné de la surface de freinage fixe par rapport au carter.

Il est prévu des moyens pour faire passer l'induit de frein 5 de l'une à l'autre de ses première et deuxième positions.

Ces moyens comprennent un ressort 37 de poussée de l'induit de frein 5 de la deuxième à la première position.

Ce ressort 37 est interposé entre l'induit de frein 5 et le rotor 1 et est par exemple logé dans une cavité 6 du rotor.

Le ressort 37 est par exemple hélicoïdal et est appliqué, par une de ses extrémités, à un premier épaulement annulaire 7 de la cavité, tourné vers l'induit de frein 5 et, par son autre partie extrême, à l'induit de frein 5.

Cette cavité 6 du rotor 1 et ce premier épaulement 7 sont formés par un déviateur de flux interne du rotor, obtenu par usinage de tôles du rotor, par empilage de celles-ci avec des diamètres différents obtenus lors du découpage des tôles ou autres.

L'induit de frein 5 est, au moins en partie, en un matériau magnétique doux lui permettant, pour une valeur suffisante du champ magnétique du rotor 1, d'être attiré de la première à la deuxième position et d'y être maintenu.

Il est prévu en outre des moyens 8 pour empêcher la rotation de l'induit de frein 5 par rapport à l'anneau de court-circuit 2 et au rotor 1 en première position.

Ces moyens 8 de blocage en rotation comportent, respectivement sur l'anneau de court-circuit 2 et sur l'induit de frein 5, des première et deuxième surfaces d'appui 9, 10 tournées l'une vers l'autre et inclinées par rapport à l'axe 3.

Les premières surfaces d'appui 9 sont ménagées en creux dans la surface latérale 4 de l'anneau de court-circuit, tournée axialement vers l'induit de frein 5.

Cette surface latérale 4 comporte une première partie radialement intérieure 11, dans laquelle est ménagée en creux la première surface d'appui 9, et une deuxième partie radialement extérieure 12 de révolution, raccordée à la première partie 11.

La deuxième partie extérieure 12 est sans solution de continuité autour de l'axe 3 et par exemple annulaire.

La deuxième partie extérieure 12 est incluse dans un plan incliné par rapport à l'axe 3, par exemple orthogonal à celui-ci.

L'induit de frein 5 comporte une surface de freinage 13 tournée vers la surface de freinage fixe par rapport au carter.

La surface de freinage 13 de l'induit de frein 5 est portée dans la réalisation représentée par une corps de révolution 14 de celui-ci.

Cette surface de freinage 13 comporte par exemple des garnitures de freinage fixées sur tout ou partie de la périphérie du corps 14, en face de la surface de freinage fixe par rapport au carter, ou, comme dans la réalisation représentée, directement sur la surface du corps 14.

Dans la réalisation représentée, le corps 14 comprend une couronne 15 plane annulaire et perpendiculaire à l'axe 3.

La surface 16 de la couronne 15, opposée à la surface de freinage 13 est tournée axialement vers la deuxième partie extérieure 12 de l'anneau de court-circuit.

Dans la partie intérieure 17 de la couronne 15, proche de l'axe 3, sont ménagés des renfoncements 18 dirigés vers les premières surfaces d'appui 9 et portant les deuxièmes surfaces d'appui 10 en vis-à-vis de celles-ci.

Les renfoncements 18 et la couronne 15 sont prolongés en un tube cylindrique intérieur 19 centré sur l'axe 3 et se terminant à sa partie extrême libre en un rebord intérieur 20 de butée contre le ressort.

Le rebord 20 est par exemple de révolution autour de l'axe 3, par exemple plan, orthogonal à l'axe 3 et annulaire.

La couronne 15, le tube 19 et le rebord 20 comportent une ouverture 21 de passage de l'arbre.

Les première et deuxième surfaces d'appui 9, 10, sont de formes complémentaires et comportent respectivement des première et deuxième rampes de guidage réciproque 22, 23 hélicoïdales et centrées sur l'axe 3.

Le pas des rampes hélicoïdales 22, 23 est orienté de manière à ce que l'induit de frein 5 soit déplacé de la deuxième à la première position, par rotation de l'anneau de court-circuit 2 par rapport à l'induit de frein 5 dans le sens de rotation du rotor 1 par rapport au carter.

Suivant une ligne de pente prise à distance constante par rapport à l'axe 3, les rampes 22, 23 ont un pas d'hélice correspondant à un angle a d'inclinaison, par rapport à un plan perpendiculaire à l'axe 3, d'une valeur déterminée.

La première rampe 22 de l'anneau de court-circuit 2 est en outre inclinée en devers par rapport à l'axe 3.

Les première et deuxième rampes 22, 23 sont inclinées, vues dans un plan de section axiale et vues de manière centripète par rapport à l'axe 3, vers le côté du rotor 1 éloigné de la surface latérale 4 de l'anneau de court-circuit 2, c'est-à-dire vers l'intérieur du rotor.

Cette inclinaison correspond à un angle b compris dans un plan axial, par rapport à un plan orthogonal à l'axe 3.

Les première et deuxième rampes 22, 23 sont raccordées à des troisième et quatrième rampes 24, 25 également inclinées en devers mais de pas orienté en sens inverse du leur.

Dans une réalisation, non représentée, les troisième et quatrième rampes 24, 25 ont un angle de pas a et/ou un angle de devers b différent de celui des première et deuxième rampes 22, 23.

Dans la réalisation représentée, les troisième et quatrième rampes 24, 25 ont un angle de pas a et/ou un angle de devers b égal à celui des première et deuxième rampes 22, 23.

Le première et troisième rampes 22, 24 et les deuxième et quatrième rampes 23, 25 sont raccordées entre elles en des arêtes 26, 27 sensiblement rectilignes et incluses dans un plan axial.

Les rampes 22-25 permettent ainsi un guidage de l'induit de frein 5 par rapport à l'anneau de court-circuit 2 dans les deux sens de rotation du rotor 1 par rapport au carter.

Les rampes complémentaires 22, 23, respectivement 24, 25 sont localisées sur la première partie 11 de la surface latérale 4 et sur la partie intérieure 17 de la couronne 15, en des endroits en vis-à-vis axialement.

L'anneau de court-circuit 2 et l'induit de frein 5 comportent plusieurs groupes de première et troisième rampes 22, 24 et de deuxième et quatrième rampes 23, 25, réparties régulièrement autour de l'axe 3, par exemple, dans la réalisation représentée, quatre groupes répartis à 90° l'un à la suite de l'autre.

Dans d'autres réalisations, non représentées, ces groupes sont prévus en un nombre différent, par exemple égal à deux, trois, cinq ou six.

La première partie intérieure 11 de la surface latérale 4 de l'anneau de court-circuit 2 comporte, entre deux groupes consécutifs de rampes 22, 24 des parties 28 exemptes de creux dirigés axialement vers l'induit de frein 5.

La partie intérieure 17 de la couronne 15 de l'induit de frein 5 comporte, entre deux groupes consécutifs de rampes 23, 25, des parties 29 exemptes de renfoncements dirigés axialement vers l'anneau de court-circuit 2.

Le bord intérieur de la partie 28 comporte un prolongement axial 30 vers une surface intérieure 31 cylindrique circulaire de l'anneau 2 se raccordant à la partie extrême intérieure de l'arête 26.

La surface intérieure 31 délimite avec un deuxième épaulement 32 du rotor, tourné axialement vers le rebord 20, une cavité 33 de logement du tube 19 de l'induit de frein 5.

Le deuxième épaulement 32 est formé par les premières tôles du rotor tournées vers l'anneau de court-circuit 2.

En deuxième position, le tube 19 et le rebord 20 sont à distance de la surface intérieure 31, la couronne 15 est à distance de la deuxième partie extérieure 12, et les rampes 23,25 de l'induit de frein 5 et celles 22,24 de l'anneau de court-circuit 2 sont espacées axialement l'une de l'autre, de même que leurs parties 28 et 29.

L'induit de frein 5 n'est pas en contact dans cette deuxième position avec l'anneau de court-circuit 2 mais est en contact avec le rotor 1 et ce seulement par l'intermédiaire du rebord de butée 20 en appui sur le deuxième épaulement 32.

Les surfaces de freinage, l'induit de frein 5 et l'anneau de court-circuit 2 sont agencés de manière qu'en première position de freinage, les rampes 23, 25 de l'induit de frein 5 restent au moins en partie dans le creux délimité par les rampes complémentaires 22, 24 de l'anneau 2.

Dans la réalisation représentée, l'induit de frein 5 est réalisé sous forme d'une culasse monobloc de tôle en acier magnétique doux.

La forme de l'induit de frein est réalisée par emboutissage, ce qui permet une fabrication à coût bas, se prêtant facilement à la production en série.

L'anneau de court-circuit 2 et ses rampes 22,24 sont réalisés par moulage.

Les premières surfaces d'appui 9 de l'anneau de court-circuit 2 sont en aluminium, la surface latérale 4 de l'anneau de court-circuit étant par exemple également en aluminium.

L'angle de plus grande pente des rampes par rapport à un plan perpendiculaire à l'axe 3 est supérieur à l'angle de frottement du matériau des deuxièmes surfaces d'appui 10 sur celui des premières surfaces d'appui 9, afin d'empêcher un blocage par adhérence de l'induit de frein 5 sur l'anneau de court-circuit 2 en position de freinage, lors du démarrage du moteur.

La forme des rampes permet de transmettre progressivement l'effort de l'anneau de court-circuit sur l'induit de frein lors du passage de la deuxième position à la première position de freinage, ce qui évite d'avoir une pénétration du matériau de l'induit de frein 5 dans celui de l'anneau de court-circuit 2.

Cela permet en outre d'obtenir un matage régulier des surfaces d'appui 9 de l'anneau de court-circuit 2 et garantir un bon glissement des surfaces d'appui 9, 10 l'une sur l'autre.

Un nombre suffisant de rampes permet de répartir l'effort transmis sur une surface de plus grande étendue et diminue donc la pression exercée par unité de surface sur les rampes.

Le moteur comporte un déviateur de flux 34 solidaire de l'anneau de court-circuit 2.

L'induit de frein 5 est exempt de capteur de flux.

Le déviateur de flux 34 est situé à l'extérieur de l'anneau de court-circuit 2 et comprend, dans la réalisation représentée, une bague 35 en matériau ferromagnétique entourant l'anneau 2 en étant centré sur l'axe 3.

La bague 35 comporte un bord 36 tourné axialement vers la couronne 15.

Dans une réalisation, non représentée, le bord 36 affleure à la deuxième partie extérieure 12 de la surface 4 de l'anneau de court-circuit.

Dans une autre réalisation, non représentée, le bord 36 est légèrement en retrait axial de la deuxième partie extérieure 12 de la surface 4 vers l'intérieur du rotor 1.

Dans la réalisation représentée, le bord 36 dépasse légèrement axialement de la deuxième partie extérieure 12 de la surface 4 vers l'induit de frein 5.

Le déviateur de flux 34 est fixé à l'anneau de court-circuit 2, de sorte à ménager une distance axiale déterminée entre son bord 36 et l'induit de frein 5.

Cette distance axiale est telle qu'elle permet de faire passer l'induit de frein 5 de la première à la deuxième position par attraction magnétique, lorsque la tension d'alimentation du moteur devient supérieure à une tension d'appel déterminée.

Cette distance axiale est également telle qu'elle permet de faire passer l'induit de frein 5 de la deuxième à la première position par poussée du ressort 37, lorsque la tension d'alimentation du moteur devient inférieure à une tension de maintien déterminée.

La fixation de la bague 35 autour de l'anneau de court-circuit 2 est effectuée par tout moyen approprié, par exemple par ajustement serré, par des griffes élastiques obtenues par découpage et/ou emboutissage de la bague 35 ou par matriçage des endroits localisés sur la bague 35 en vue de sertir la bague sur l'anneau.

L'anneau de court-circuit 2 est de diamètre extérieur plus petit que celui du reste du rotor 1, l'épaisseur radiale de la bague 35 étant inférieure à la différence entre ces deux diamètres, afin de ne pas diminuer l'entrefer entre le rotor et le stator.

La bague 35 peut être obtenue à partir d'un tube, ou d'une tôle roulée et agrafée ou sertie dans un acier d'emboutissage classique ou un acier à ressort.

Cela allège l'induit de frein 5 et évite que le déviateur de flux 35 frotte contre l'alésage du stator et provoque ainsi une détérioration de l'isolation.

Un guidage malencontreux de l'induit de frein 5 par l'extérieur de l'anneau de court-circuit 2 est également évité.

Enfin, la tension de maintien du moteur, ainsi que la tension d'appel, sont rendues moins sensibles à l'orientation spatiale du moteur, horizontale, verticale bout d'arbre en haut ou verticale bout d'arbre en bas.

L'angle a de pas d'hélice faible permet d'améliorer l'effet de coin de l'anneau de court-circuit 2 sur l'induit de frein 5 par l'intermédiaire des surfaces d'appui 9, 10 en position de freinage.

Un angle b suffisamment grand permet d'obtenir un angle de plus grande pente suffisant des rampes.

Dans la réalisation représentée, l'angle a est compris entre 25° et 40° et l'angle b est compris entre 20° et 50°.

Bien entendu, ces valeurs peuvent être adaptées en fonction des matériaux et surfaces d'appui 9, 10.

## Revendications

1. Dispositif de freinage d'un moteur électrique, notamment d'un appareil tel que tondeuse à gazon, comportant:
- un anneau de court-circuit (2) de rotor (1) destiné à être monté tournant par rapport à un carter du moteur autour d'un axe (3) ;
- au moins une surface de freinage telle que garniture, destinée à être immobilisée par rapport au carter et à être disposée à distance axialement de l'anneau de court-circuit (2) ;
- un induit de frein (5), comportant une tôle fabriquée par emboutissage et en un matériau magnétique doux, monté mobile axialement entre une première position de freinage sur la surface de freinage et une deuxième position éloignée de celle-ci ;
- un ressort de poussée de l'induit de frein (5) de la deuxième position à la première position ;
l'anneau de court-circuit (2) et l'induit de frein (5) comportant respectivement des première et deuxième surfaces d'appui (9, 10) tournées l'une vers l'autre et inclinées par rapport à l'axe (3),
**caractérisé en ce que** la surface (4) de l'anneau de court-circuit (2), tournée vers l'induit de frein (5) comporte une première partie intérieure (11), dans laquelle la première surface d'appui (9) est ménagée en creux, et une deuxième partie extérieure (12) de révolution autour de l'axe (3) et raccordée à la première partie intérieure (11), les première et deuxième surfaces d'appui (9, 10) comportant des première et deuxième rampes (22, 23) hélicoïdales de guidage réciproque, inclinées axialement vers l'intérieur du rotor (1), le pas des rampes étant orienté de manière que l'induit de frein (5) soit déplacé de la deuxième à la première position, par rotation de l'anneau de court-circuit (2) par rapport à l'induit de frein (5) dans le sens de rotation du rotor (1) par rapport au carter.

2. Dispositif de freinage selon la revendication 1, **caractérisé en ce que** l'induit de frein (5) est guidé de la deuxième à la première position par rapport à l'anneau de court-circuit (2) uniquement par l'intermédiaire des rampes (22, 23).

3. Dispositif de freinage selon la revendication 1 ou 2, **caractérisé en ce que** les première et deuxième surfaces d'appui (9, 10) comprennent respectivement des troisième et quatrième rampes hélicoïdales de guidage réciproque (24, 25), inclinées axialement vers l'intérieur du rotor (1), de pas orienté de manière inverse par rapport à celui des première et deuxième rampes (22, 23) et raccordées à celles-ci au fond du creux qu'elles délimitent.

4. Dispositif de freinage selon l'une quelconque des revendications 1 à 3, **caractérisé en ce que** le coefficient de frottement de la deuxième rampe sur la première rampe est inférieur à l'angle de plus grande pente de celle-ci par rapport à un plan perpendiculaire à l'axe (3).

5. Dispositif de freinage selon l'une quelconque des revendications 1 à 4, **caractérisé en ce que** l'angle d'inclinaison de l'hélice des rampes (22, 23, 24, 25), par rapport à un plan perpendiculaire à l'axe (3), correspond à un angle (a) de pas, compris entre 25° et 40°.

6. Dispositif de freinage selon l'une quelconque des revendications 1 à 5, **caractérisé en ce que** l'inclinaison (b) vers l'intérieur du rotor (1) des rampes hélicoïdales (22, 23, 24, 25) est comprise entre 20° et 50°, par rapport à un plan perpendiculaire à l'axe (3).

7. Dispositif de freinage selon l'une quelconque des revendications 1 à 6, **caractérisé en ce qu'**il est agencé de manière que les rampes (23, 25) de l'induit de frein (5) restent dans le creux délimité par les rampes (22, 24) de l'anneau de court-circuit (2), dans la première position de freinage.

8. Dispositif de freinage selon la revendication 3, **caractérisé en ce que** les première et troisième rampes (22, 24), respectivement les deuxième et quatrième rampes (23, 25) sont symétriques l'une de l'autre par rapport à un plan axial et sont raccordées entre elles par une arête (26, 27) rectiligne comprise dans ce plan axial.

9. Dispositif de freinage selon l'une quelconque des revendications 1 à 8, **caractérisé en ce que** les rampes (22, 23, 24, 25) de l'anneau de court-circuit (2) et de l'induit de frein (5) sont localisées en des endroits déterminés, par exemple répartis régulièrement de la première partie intérieure (11) et d'une partie (17) de l'induit de frein (5) intérieure à un corps de révolution (14), par exemple une couronne (15), de l'induit de frein (5).

10. Dispositif de freinage selon l'une quelconque des revendications 1 à 9, **caractérisé en ce que** l'induit de frein (5) comporte un corps de révolution (14), par exemple une couronne (15), portant une surface de freinage (13) tournée vers la surface de freinage immobilisée par rapport au carter, un tube intérieur (19), par exemple cylindrique circulaire, raccordé par une partie extrême à la partie intérieure (17) du corps de révolution (14), les rampes (23, 25) de l'induit de frein (5) étant prévues sur des renfoncements (18) de raccordement de la partie intérieure (17) au tube (19), dirigés vers l'anneau de court-circuit (2), la partie extrême libre du tube (19) comportant un rebord (20) de butée, par exemple plan perpendiculaire à l'axe (3) et annulaire, contre le ressort (37) et contre le rotor (1) en deuxième position, l'anneau de court-circuit (2) comportant une cavité (33) de logement du tube (19), le rotor (1) comportant une cavité (6) de logement du ressort (37) et un épaulement (7) d'appui du ressort (37).

11. Dispositif de freinage selon la revendication 10, **caractérisé en ce que** la cavité (33) de logement du tube (19) est délimitée par une surface intérieure axiale (31) et un deuxième épaulement (32) du rotor (1), par exemple formé par les premières tôles du rotor tournées vers l'anneau de court-circuit (2), un jeu étant prévu entre le tube (19) et la surface intérieure (31) de la cavité de logement du tube, entre le corps de révolution (14) de l'induit de frein (5) et la surface latérale (4) de l'anneau de court-circuit, ainsi qu'entre les rampes (23,25) de l'induit de frein (5) et celles (22,24) de l'anneau de court-circuit (2) en deuxième position, l'induit de frein (5) étant à distance de l'anneau de court-circuit (2) et n'étant en contact avec le rotor (1) que par le rebord de butée (20) en deuxième position.

12. Dispositif de freinage selon la revendication 11, **caractérisé en ce que** les rampes (23, 25) de l'induit de frein (5) ont une fonction de raidisseur.

13. Dispositif de freinage selon l'une quelconque des revendications 1 à 12, **caractérisé en ce qu'**il comporte un déviateur de flux (34) fixé à l'anneau de court-circuit (2), l'induit de frein (5) étant exempt de capteur de flux.

14. Dispositif de freinage selon la revendication 13, **caractérisé en ce que** le déviateur de flux (34) comprend une bague (35) en un matériau ferromagnétique entourant l'anneau de court-circuit (2) et fixé à celui-ci, par exemple par ajustement serré, par des griffes élastiques ménagées par découpage et/ou emboutissage dans la bague (35), ou par matriçage.

15. Dispositif de freinage selon la revendication 14, **caractérisé en ce que** la bague (35) est obtenue à partir d'un tube, d'une tôle roulée et agrafée ou sertie dans un acier d'emboutissage ou un acier à ressort.

16. Dispositif de freinage selon l'une quelconque des revendications 1 à 15, **caractérisé en ce que** les rampes (22, 24) de l'anneau de court-circuit (2) ou l'anneau de court-circuit (2) est en aluminium, et les rampes (23, 25) de l'induit de frein (5) ou l'induit de frein (5) est en acier magnétique doux.

17. Moteur électrique, notamment d'un appareil tel que tondeuse à gazon, comportant un carter et un rotor à anneau de court-circuit monté tournant par rapport au carter, **caractérisé en ce qu'**il comporte un dispositif de freinage selon l'une quelconque des revendications 1 à 16.

18. Appareil, par exemple tondeuse à gazon, **caractérisé en ce qu'**il est équipé d'un moteur selon la revendication 17 et/ou d'un dispositif de freinage selon l'une quelconque des revendications 1 à 16.

## Patentansprüche

1. Bremsvorrichtung eines Elektromotors, insbesondere eines Gerätes, etwa eines Rasenmähers, mit
einem Kurzschlußring (2) des Läufers (1), der um eine Achse (3) relativ zu einem Motorgehäuse drehbar gelagert ist,
mindestens einer Bremsfläche, etwa einem Bremsbelag, die relativ zu dem Gehäuse fest und in axialem Abstand von dem Kurzschlußring (2) angeordnet ist,
einem Bremsanker (5), der ein geprägtes Blech aus weichmagnetischem Material aufweist und in Axialrichtung zwischen einer ersten Bremsstellung an der Bremsfläche und einer von der Bremsfläche entfernten zweiten Stellung bewegbar montiert ist, und
einer den Bremsanker (5) von der zweiten Stellung in die erste Stellung drückenden Feder,
wobei der Kurzschlußring (2) und der Bremsanker (5) eine erste bzw. eine zweite Lagerfläche (9, 10) aufweisen, die einander gegenüberstehen und bezüglich der Achse (3) geneigt sind,
**dadurch gekennzeichnet, daß** die dem Bremsanker (5) zugewandte Fläche (4) des Kurzschlußrings (2) einen ersten inneren Teil (11), in dem die erste Lagerfläche (5) vertieft ausgebildet ist, sowie einen durch Rotation um die Achse (3) gebildeten und mit dem ersten inneren Teil (11) verbundenen zweiten äußeren Teil (12) aufweist, wobei die beiden Lagerflächen (9, 10) eine erste bzw. eine zweite schraubenförmige Rampe (22, 23) zur gegenseitigen Führung aufweisen, die zum Innern des Läufers (1) axial geneigt sind, wobei die Steigung der Rampen derart gerichtet ist, daß bei Drehung des Kurzschlußrings (2) gegenüber dem Bremsanker (5) im Sinne einer Drehung des Läufers (1) gegenüber dem Gehäuse der Bremsanker (5) aus der zweiten in die erste Stellung bewegt wird.

2. Bremsvorrichtung nach Anspruch 1, **dadurch gekennzeichnet, daß** der Bremsanker (5) allein mittels der Rampen (22, 23) aus der zweiten in die erste Stellung relativ zu dem Kurzschlußring (2) geführt ist.

3. Bremsvorrichtung nach Anspruch 1 oder 2, **dadurch gekennzeichnet, daß** die erste und die zweite Lagerfläche (9, 10) jeweils eine dritte bzw. eine vierte schraubenförmige Rampe (24, 25) zur gegenseitigen Führung aufweist, die zum Innern des Läufers (1) mit einer zur Steigung der ersten und der zweiten Rampe (22, 23) umgekehrt gerichteten Steigung axial geneigt sind und mit diesen am Boden der sie bildenden Vertiefungen verbunden sind.

4. Bremsvorrichtung nach einem der Ansprüche 1 bis 3, **dadurch gekennzeichnet, daß** der Reibungskoeffizient der zweiten Rampe an der ersten Rampe kleiner ist als ihr größter Neigungswinkel relativ zu einer zu der Achse (3) senkrechten Ebene.

5. Bremsvorrichtung nach einem der Ansprüche 1 bis 4, **dadurch gekennzeichnet, daß** der Schraubenneigungswinkel der Rampen (22, 23, 24, 25) relativ zu einer zu der Achse (3) senkrechten Ebene einem Steigungswinkel (a) zwischen 25° und 40° entspricht.

6. Bremsvorrichtung nach einem der Ansprüche 1 bis 5, **dadurch gekennzeichnet, daß** der Neigungswinkel (b) der schraubenförmigen Rampen (22, 23, 24, 25) zum Innern des Läufers (1) zwischen 20° und 50° gegenüber einer zu der Achse (3) senkrechten Ebene beträgt.

7. Bremsvorrichtung nach einem der Ansprüche 1 bis 6, **gekennzeichnet durch** eine derartige Gestaltung, daß die Rampen (23, 25) des Bremsankers (5) in der ersten Bremsstellung in der von den Rampen (22, 24) des Kurzschlußrings (2) begrenzten Vertiefung liegen.

8. Bremsvorrichtung nach Anspruch 3, **dadurch gekennzeichnet, daß** die erste und die dritte Rampe (22, 25) bzw. die zweite und die vierte Rampe (23, 25), bezogen auf eine Axialebene, symmetrisch zueinander und über einen in der Axialebene liegenden geradlinigen Steg (26, 27) miteinander verbunden sind.

9. Bremsvorrichtung nach einem der Ansprüche 1 bis 8, **dadurch gekennzeichnet, daß** die Rampen (22, 23, 24, 25) des Kurzschlußrings (2) und des Bremsankers (5) an vorgegebenen Stellen, beispielsweise regelmäßig verteilt an dem ersten inneren Teil (11) und einem Teil (17) des Bremsankers (5) innerhalb eines Drehkörpers (14), beispielsweise eines Kranzes (15), des Bremsankers (5), angeordnet sind.

10. Bremsvorrichtung nach einem der Ansprüche 1 bis 9, **dadurch gekennzeichnet, daß** der Bremsanker (5) einen Drehkörper (15), beispielsweise einen Kranz (15), der eine der gehäusefesten Bremsfläche zugewandte Bremsfläche (13) trägt, sowie ein beispielsweise kreiszylindrisches Innenrohr (19), das über ein äußeres Teil am Innenteil (17) des Drehkörpers (14) befestigt ist, aufweist, wobei die Rampen (23, 25) des Bremsankers (5) an Verstärkungen (18) vorgesehen sind, über die der Innenteil (17) mit dem Rohr (19) verbunden ist und die zu dem Kurzschlußring (2) gerichtet sind, wobei das freie Ende des Rohrs (19) einen etwa in einer zu der Achse (3) senkrechten Ebene gelegenen, ringförmigen Anschlagrand (20) für die Feder (37) und den Läufer (1) in der zweiten Stellung aufweist, wobei der Kurzschlußring (2) einen Hohlraum (33) zur Aufnahme des Rohrs (19) aufweist, und wobei der Läufer (1) einen Hohlraum (6) zur Aufnahme der Feder (37) und eine Anschlagschulter (7) für die Feder (37) aufweist.

11. Bremsvorrichtung nach Anspruch 10, **dadurch gekennzeichnet, daß** der Hohlraum (33) zur Aufnahme des Rohrs (19) von einer inneren Axialfläche (31) und einer zweiten Schulter (32) des Läufers (1) begrenzt ist und beispielsweise durch die dem Kurzschlußring (2) zugewandten ersten Läuferbleche gebildet ist, wobei zwischen dem Rohr (19) und der Innenfläche (31) des Hohlraums zur Aufnahme des Rohrs, zwischen dem Drehkörper (14) des Bremsankers (5) und der Seitenfläche (4) des Kurzschlußrings, sowie zwischen den Rampen (23, 25) des Bremsankers (5) und denen (22, 24) des Kurzschlußrings (2) in der zweiten Stellung ein Spiel vorgesehen ist, und wobei der Bremsanker (5) sich in Abstand von dem Kurzschlußring (2) befindet und mit dem Läufer (1) nur über den Anschlagrand (20) in der zweiten Stellung Berührung hat.

12. Bremsvorrichtung nach Anspruch 11, **dadurch gekennzeichnet, daß** die Rampen (23, 25) des Bremsankers (5) eine Versteifungsfunktion haben.

13. Bremsvorrichtung nach einem der Ansprüche 1 bis 12, **gekennzeichnet durch** eine an dem Kurzschlußring (2) befestigte Flußablenkeinrichtung (34), wobei der Bremsanker (5) keinen Flußaufnehmer aufweist.

14. Bremsvorrichtung nach Anspruch 13, **dadurch gekennzeichnet, daß** die Flußablenkeinrichtung (34) einen Ring (35) aus ferromagnetischem Material aufweist, der den Kurzschlußring (2) umgibt und an diesem beispielsweise durch Preßsitz, durch in dem Ring (35) durch Stanzen und/oder Tiefziehen ausgebildete elastische Klauen oder durch Gesenkformen befestigt ist.

15. Bremsvorrichtung nach Anspruch 14, **dadurch gekennzeichnet, daß** der Ring (35) aus einem Rohr aus eingerolltem und geklammerten oder gebördelten Blech aus Tiefziehoder Federstahl gebildet ist.

16. Bremsvorrichtung nach einem der Ansprüche 1 bis 15, **dadurch gekennzeichnet, daß** die Rampen (22, 24) des Kurzschlußrings oder der Kurzschlußring (2) aus Aluminium und die Rampen (23, 25) des Bremsankers (5) oder der Bremsanker (5) aus weichmagnetischem Stahl bestehen.

17. Elektromotor, insbesondere eines Gerätes, etwa eines Rasenmähers, mit einem Gehäuse und einem relativ zu dem Gehäuse drehbar gelagerten Kurzschlußringläufer, **gekennzeichnet durch** eine Bremsvorrichtung nach einem der Ansprüche 1 bis 16.

18. Gerät, beispielsweise Rasenmäher, **gekennzeichnet durch** seine Ausrüstung mit einem Motor nach Anspruch 17 und/oder einer Bremsvorrichtung nach einem der Ansprüche 1 bis 16.

## Claims

1. Braking device for an electric motor, in particular of an apparatus such as a lawn mower, comprising:
- a short-circuiting ring (2) for a rotor (1) designed to be mounted so that it turns in relation to a casing of the motor about an axis (3);
- at least one braking surface such as a lining, designed to be immobilised in relation to the casing and to be disposed axially a distance from the short-circuiting ring (2);
- a brake armature (5) comprising a sheet produced by lamination in a soft magnetic material, mounted so that it can move axially between a first braking position on the braking surface and a second position remote from the latter;
- a thrust spring for pushing the brake armature (5) from the second position to the first position;
the short-circuiting ring (2) and the brake armature (5) comprising respectively first and second bearing surfaces (9, 10) facing one another and inclined in relation to the axis (3),
**characterised in that** the surface (4) of the short-circuiting ring (2) facing the brake armature (5) comprises a first internal portion (11) in which the first bearing surface (9) is formed concavely, and a second external portion (12) of revolution around the axis (3) and connected to the first internal portion (11), the first and second bearing surfaces (9, 10) comprising first and second helical reciprocal guide ramps (22, 23) inclined axially towards the interior of the rotor (1), the pitch of the ramps being orientated in such a way that the brake armature (5) is moved from the second to the first position by rotation of the short-circuiting ring (2) in relation to the brake armature (5) in the direction of rotation of the rotor (1) in relation to the casing.

2. Braking device according to claim 1, **characterised in that** the brake armature (5) is guided from the second to the first position in relation to the short-circuiting ring (2) solely through the intermediary of the ramps (22, 23).

3. Braking device according to claim 1 or 2, **characterised in that** the first and second bearing surfaces (9, 10) comprise respectively third and fourth helical reciprocal guide ramps (24, 25) inclined axially towards the interior of the rotor (1), with a pitch oriented in the opposite way in relation to that of the first and second ramps (22, 23) and connected to the latter at the bottom of the hollow which they delimit.

4. Braking device according to any one of claims 1 to 3, **characterised in that** the coefficient of friction of the second ramp on the first ramp is less than the angle of greatest slope of the latter in relation to a plane perpendicular to the axis (3).

5. Braking device according to any one of claims 1 to 4, **characterised in that** the angle of inclination of the helix of the ramps (22, 23, 24, 25) in relation to a plane perpendicular to the axis (3) corresponds to a pitch angle (a) of between 25° and 40°.

6. Braking device according to any one of claims 1 to 5, **characterised in that** the inclination (b) of the helical ramps (22, 23, 24, 25) towards the interior of the rotor (1) lies between 20° and 50° in relation to a plane perpendicular to the axis (3).

7. Braking device according to any one of claims 1 to 6, **characterised in that** it is arranged such that the ramps (23, 25) of the brake armature (5) remain in the hollow delimited by the ramps (22, 24) of the short-circuiting ring (2) in the first braking position.

8. Braking device according to claim 3, **characterised in that** the first and third ramps (22, 24) and the second and fourth ramps (23, 25) respectively are symmetrical with respect to one another in relation to an axial plane and are interconnected by a straight ridge (26, 27) lying in this axial plane.

9. Braking device according to any one of claims 1 to 8, **characterised in that** the ramps (22, 23, 24, 25) of the short-circuiting ring (2) and the brake armature (5) are located in predetermined places, for example distributed uniformly, on the first internal portion (11) and a portion (17) of the brake armature (5) inside a body of revolution (14), for example a crown (15), of the brake armature (5).

10. Braking device according to any one of claims 1 to 9, **characterised in that** the brake armature (5) comprises a body of revolution (14), for example a crown (15), carrying a braking surface (13) facing the braking surface immobilised in relation to the casing, an internal tube (19) of circular cylindrical shape for example, connected by an end portion to the internal portion (17) of the body of revolution (14), the ramps (23, 25) of the brake armature (5) being provided on indentations (18) connecting the internal portion (17) to the tube (19) and facing towards the short-circuiting ring (2), the free end portion of the tube (19) comprising a thrust rim (20), which is for example flat and perpendicular to the axis (3) and annular and bears against the spring (37) and against the rotor (1) in the second position, the short-circuiting ring (2) comprising a cavity (33) for housing the tube (19), the rotor (1) comprising a cavity (6) for housing the spring (37), and a shoulder (7) for supporting the spring (37).

11. Braking device according to claim 10, **characterised in that** the cavity (33) for housing the tube (19) is delimited by an internal axial surface (31) and a second shoulder (32) of the rotor (1), formed for example by the first sheets of the rotor facing towards the short-circuiting ring (2), a set being provided between the tube (19) and the internal surface (31) of the cavity for housing the tube, between the body of revolution (14) of the brake armature (5) and the lateral surface (4) of the short-circuiting ring, and between the ramps (23, 25) of the brake armature (5) and those (22, 24) of the short-circuiting ring (2) in the second position, the brake armature (5) being distant from the short-circuiting ring (2) and only being in contact with the rotor (1) through the thrust rim (20) in the second position.

12. Braking device according to claim 11, **characterised in that** the ramps (23, 25) of the brake armature (5) have a stiffening function.

13. Braking device according to any one of claims 1 to 12, **characterised in that** it comprises a flux deflector (34) fixed to the short-circuiting ring (2), the brake armature (15) having no flux sensor.

14. Braking device according to claim 13, **characterised in that** the flux deflector (34) comprises a ring (35) made of a ferromagnetic material surrounding the short-circuiting ring (2) and fixed to the latter, for example by a shrink fit, by elastic claws formed by cutting and/or punching in the ring (35), or by swaging.

15. Braking device according to claim 14, **characterised in that** the ring (35) is obtained from a tube, a rolled and fastened or crimped sheet made of a stamping steel or a spring steel.

16. Braking device according to any one of claims 1 to 15, **characterised in that** the ramps (22, 24) of the short-circuiting ring (2) or the short-circuiting ring (2) is made of aluminium, and the ramps (23, 25) of the brake armature (5) or the brake armature (5) is made of soft magnetic steel.

17. Electric motor, in particular of an apparatus such as a lawn mower, comprising a casing and a rotor with a short-circuiting ring mounted so that it turns in relation to the casing, **characterised in that** it comprises a braking device according to any one of claims 1 to 16.

18. Apparatus, for example lawn mower, **characterised in that** it is equipped with a motor according to claim 17 and/or a braking device according to any one of claims 1 to 16.
